# EUROPEAN PATENT APPLICATION

(11) **EP 4 335 875 A1**
(43) Date of publication of application: **13.03.2024**
(21) Application number: 22382844.3
(22) Date of filing: 12.09.2022
(51) Int. Cl.: C08B 3/12, C08G 63/91, C08J 3/12, C08L 1/10

(54) **CHEMICALLY MODIFIED BACTERIAL CELLULOSE CORE-SHELL MICROPARTICLES AND THEIR USE FOR THE ENCAPSULATION OF BIOACTIVE ELEMENTS**

(71) Applicant: Consejo Superior De Investigaciones Científicas, 28006 Madrid (ES); Consorcio Centro de Investigación Biomédica en Red, 28029 Madrid (ES)
(72) Inventor: PRIETO JIMÉNEZ, María Auxiliadora, 28040 Madrid (ES); RIVERO BUCETA, María Virginia, 28040 Madrid (ES); AGUILAR DE ARMAS, María Rosa, 28006 Madrid (ES); GARCÍA FERNÁNDEZ, Luis, 28006 Madrid (ES)
(74) Representative: Hoffmann Eitle

(57) **Abstract**

New core-shell microparticles based on bacterial cellulose (BC) and polyhydroxyalkanoates (PHAs) have been obtained by coaxial electrospraying. These particles are spherical, reproducible and stable. The core-shell of the particle is composed of a BC-PHA grafted polymer that ensures a good environment for encapsulating bioactive cargos. The polyhydroxyalkanoates (PHAs) shell provides the thin film that maintains the spherical shape of the particle.

## Description

### Technical field

The present invention can be embeded in the chemical field, particularly, in the filed of core-shell microparticles based on bacterial cellulose (BC) and polyhydroxyalkanoates (PHAs) for encapsulating bioactive cargos.

### Background of the invention

Microparticles are of great interest for delivery applications because they offer versatile advantages such as: encapsulation of a range of molecules, including hydrophobic, hydrophilic or neutral molecules, or bioactive elements such as enzymes or microorganisms; protection of cargos from degradation in the harsh environment; and control of site-specific release [Shalu Suri, Gang Ruan, Jessica Winter, Christine E. Schmidt, Chapter 1.2.19 - Microparticles and Nanoparticles, Editor(s): Buddy D. Ratner, Allan S. Hoffman, Frederick J. Schoen, Jack E. Lemons, Biomaterials Science (Third Edition), Academic Press, 2013, Pages 360-388, ISBN 9780123746269, https://doi.org/10.1016/B978-0-08-087780-8.00034-6. (https://www.sciencedirect.com/science/article/pii/B9780080877808000346)].

The cargo can be encapsulated within the particle or entrapped, that is, anchored to the outside by surface modification techniques. In addition, a microparticle offers the possibility of releasing multiple biomolecules at the same time to target more than one application. Cargo release generally occurs by degradation of the particles or by diffusion through swelling and this process can be controlled by modulating the rate of degradation of the microparticles.

The majority of micro- and nano-particles have a composition based on inorganic and organic compounds, synthetic polymers or hybrid materials, but recently there is increasing interest in their production using alternative bio-based raw materials, as renewable resources are essential to contribute to the goals of the 2030 Agenda for Sustainable Development [Carvalho2021 Nanomaterials 2021, 11, 2744].

Biodegradable polymeric micro- and nanoparticles are widely used as drug delivery systems because these biodegradable matrices not only improve drug delivery, but also provide a relatively slow release rate and extended release time [Electrospray technique for solid lipid-based particle production. Drug Development and Industrial Pharmacy, 2010; 36(4): 431-438 VBLDDI]. In this sense, polysaccharides provide excellent mechanical and chemical properties combined with the characteristics of biocompatibility and sustainability. BC is a polyssacharide that possesses very good properties such as a high tensile strength, mechanical stability, non-toxicity, high crystallinity, high water-holding capacity, a remarkable permeability to gases and liquids and a great compatibility with living organisms [International Journal of Biological Macromolecules 162 (2020) 1869-1879]. But it should be noted that cellulose as such cannot be processed like conventional thermoplastics due to its extensive network of hydrogen bonds. However, if cellulose is chemically modified, it can be used as a sustainable alternative to many durable synthetic polymeric materials. Another bacterial biopolymer of great interest are polyhydroxyalkanoates (PHA), which are hydrophobic polyesters of 3-hydroxyalkanoic acids stored as inclusions in the bacterial cytoplasm under nutrient limitations. The side chain varies in length and composition, and depending on their length, PHAs are classified as short-chain (scl), such as poly(3-hydroxybutyrate) (PHB) or poly(3-hydroxybutyrate-co-valerate) (PHBV), and medium-chain (mcl), such as poly(3-hydroxyoctanoate-co-3-hexanoate) (PHOHx). Novel microparticles based on the combination of BC and PHA have not been reported so far. In this work, two biopolymers of different nature, one hydrophobic and other hydrophilic, were specifically chosen for the development of microparticles for potential application in encapsulation of bioactive cargos.

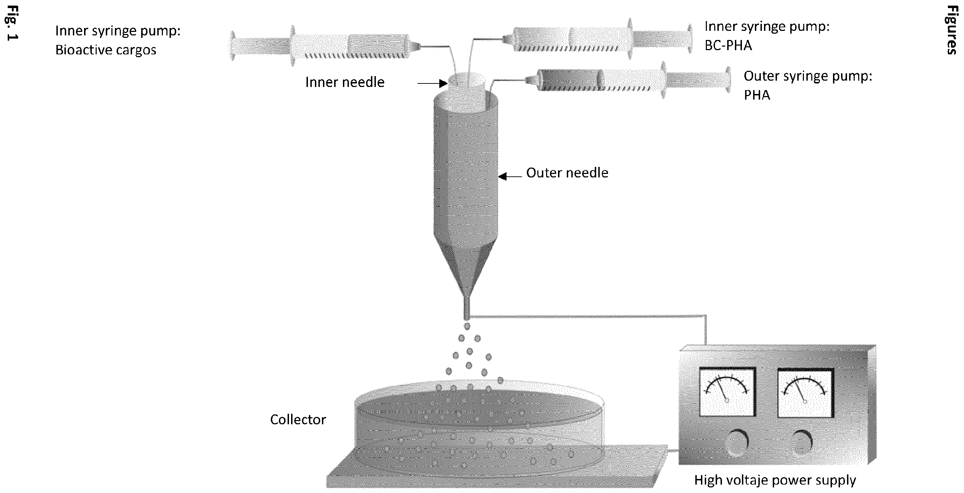

Among the various methods for producing micro- and nanoparticles, electrospray offers several advantages. Firstly, the process can be carried out under ambient conditions, which is beneficial for sensitive biomolecules and even for living cells. Furthermore, it is possible to produce nano/microparticles with a narrow size distribution, high encapsulation efficiency and in a reproducible way. This technique allows the use of coaxial electrospray methods to create core-shell particles. The coaxial electrospray configuration allows the generation of multilayer structures, which means one or more additional protective layers for the bioactive elements. In the coaxial configuration, two polymer solutions are pumped independently into a needle composed of two separate needles. The element to be encapsulated is pumped through the inner needle together with the biopolymer core solution and the other biopolymer solution flows through the outer needle to finally form the particle shell (Fig. 1).

### Brief description of the figures

**Fig 1****.** Scheme of the electrospraying process.
**Fig 2****.** ATR-FTIR bands of BC, PHB and BC-PHB polymers.
**Fig 3****.** ATR-FTIR bands of BC-PHA grafted polymers (BC with PHB, PHOHxand PHACOS) and control samples (BC, PHB, PHOHx and PHACOS).
**Fig 4****.** SEM images (3 kV) of BC-PHB polymer.
**Fig 5****.** TGA and DTG results of the BC-PHB grafting, BC and PHB references.

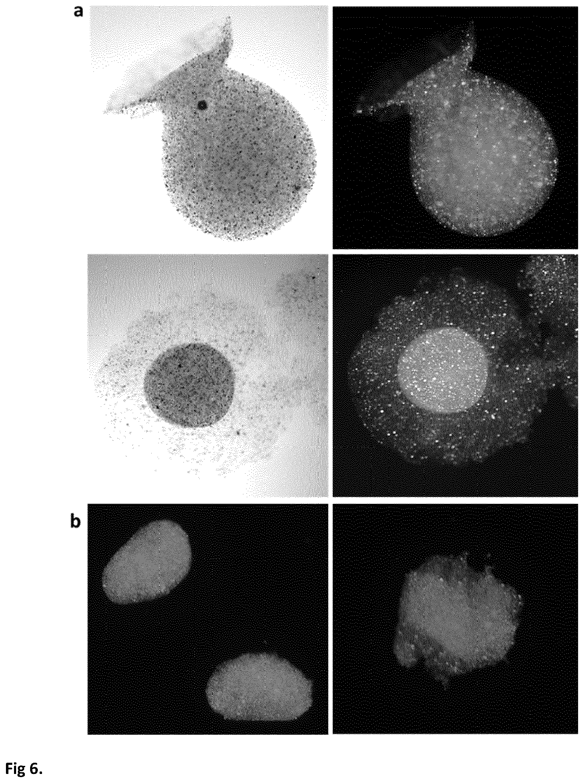

**Fig 6****. a.** Epifluorescence microscopy shows the particles obtained after electrospraying BC and PHOHx mixed in the IL. The green fluorescence is due to the coumarin added to the polymer solution. This compound binds to the hydrophobic component of the particles, that is the PHOHx, and fluoresces green (light grey and white in the image). It can be seen that PHOHx is mostly concentrated in the centre of the particle, and part of it is located on the BC. **b.** In this case, the particles have a homogeneous distribution of PHB on the BC due to the covalent grafting between both polymers, but the size and shape are not regular.

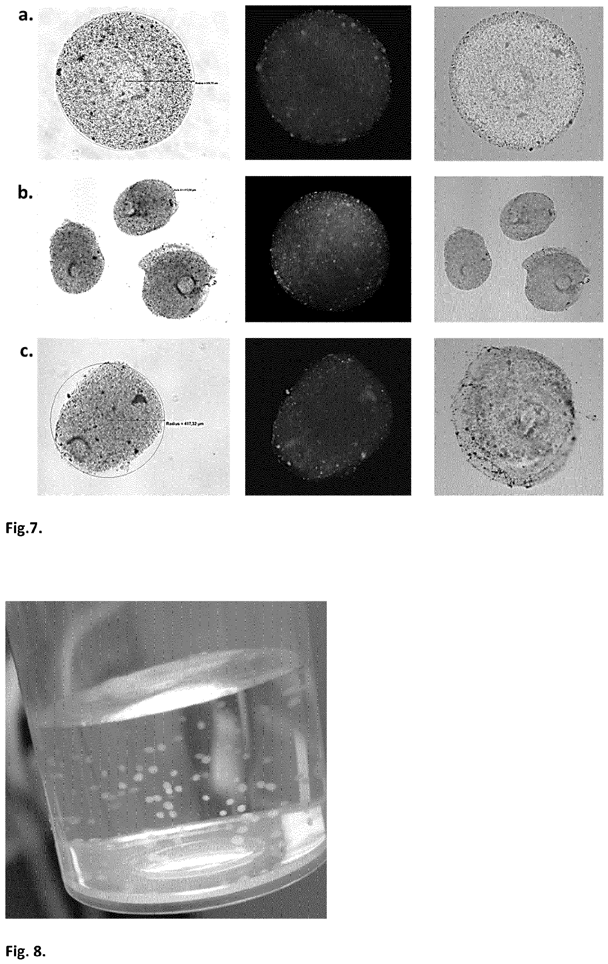

**Fig.7****.** Epifluorescence micrographs (objective 4x). Calcofluor is added to the polymer inner solution, which binds to the BC and fluoresces blue (light grey in the image). Coumarin is added to the polymer outer solution, which binds to the PHB and fluoresces green (in grey in the images of the central column with black background). The first image corresponds to the contrast phase, the second one to the green field, to see the PHB in the particle, and the third one is a superposition of the blue field and the contrast phase, to analyse the BC-PHB in the particle. **a.** Particles corresponding to an internal flow rate of 0.2 mL/h and an external flow rate of 0.05 mL/h. **b.** Particles corresponding to an internal flow rate of 0.2 mL/h and an external flow rate of 0.1 mL/h. c. Particles corresponding to an internal flow rate of 0.2 mL/h and an external flow rate of 0.2mL/h.
**Fig. 8****.** Particles obtained with an internal flow rate of 0.2 mL/h and an external flow rate of 0.05 mL/h.
**Fig 9****.** ATR-FTIR bands of particles with PHB as shell and control samples (BC and PHB).
**Fig 10****.** ATR-FTIR bands of particles with PHB, PBAT and PBS as shell and control samples (BC and PHB).
**Fig. 11****.** SEM images of **a.** PHB particles; **b.** PBS particles; **c.** PBAT particles.
**Figure 12****. a.** Images obtained from confocal laser scanning microscopy (CLSM); **b.** 3D reconstruction of images acquired through confocal laser scanning microscopy (CLSM).
**Fig. 13****.** Epifluorescence micrographs. No fluorescence dyes were added to the solutions. In the images, bacteria expressing GFP are shown in white.
**Figure 14****.** Images obtained from confocal laser scanning microscopy (CLSM); in the images, bacteria expressing GFP are shown in white; **a.** particles at 4h; **b.** particles at 24h. Two fluorescence dyes were added to the particle solution: Nile red showing PHB in red and calcofluorine showing BC in blue (in the picture they are in different shades of grey).

### Description

### Definitions

As used herein, polyhydroxyalkanoates (PHAs) is understood as a family of polyhydroxyesters of 3-, 4-, 5- and 6-hydroxyalkanoic acids, which are produced by a variety of bacterial species and are found as discrete cytoplasmic inclusions in bacterial cells.

As used herein, "polyesters", preferably "degradable polyester", are understood as polyesters whose chemical and physical characteristics undergo deterioration and completely degrade when exposed to abiotic and biotic systems such as hydrolysis, cells and enzymes biocatalyst. For example, PLA and PHA are polyesters that degrade when their ester linkages are broken.

As used herein, "PBAT" is understood as a synthetic biodegradable polymer, in particular, is an aliphatic-aromatic co-polyester that can combine excellent biodegradability provided from aliphatic polyesters and good properties from aromatic polyesters. It is derived from common petrochemicals-purified terephthalic acid (PTA), butanediol, and adipic acid-and yet it is biodegradable. As a synthetic polymer, it can readily be produced at large scale, and it has the physical properties needed to make flexible films that rival those from conventional plastics.

As used herein, "PBS" is understood as is the acronym for poly(butylene succinate), that is an aliphatic polyester and one of the most important biodegradable polyesters synthesized by polycondensation between succinic acid and butanediol.

As used herein, "cosolvent to enhance the electrosprayability" is understood as solvent that plays a significant role in the dissolution and processing of cellulose since they can reduce the viscosity and increase the electrical conductivity of ILs, key parameters in electrospray technique, and accelerate the dissolution process without compromising the interactions between ILs and cellulose.

As used herein bacterial cellulose (BC) is understood as a natural homopolymer produced extracellularly by some bacterial strains whose chemical structure is composed of linear chains of β-1,4-glucan. The highly pure 3-D structure of the nanofibers (3-8 nm) is stabilized by inter- and intra-fibrillar hydrogen bonds providing BC with unique mechanical characteristics, such as high tensile strength, mechanical stability, non-toxicity, high crystallinity, high water-holding capacity and a remarkable permeability to gases and liquids.

As used herein polyhydroxybutyrate (PHB) refers to the following chemical structure poly-3-hydroxybutyrate, a short-chain-length polyhydroxyalkanoate whose substituent is a methyl group.

As used herein an acyl chloride of polyhydroxybutyrate (PHB) refers to the following chemical structure polyhydroxybutyrate in which the terminal carboxylic acid of the scl-PHA is an acyl chloride.

As used herein poly(3-hydroxyoctanoate-co-3-hexanoate) (PHOHx) refers to the following chemical structure poly(3-hydroxyoctanoate-co-3-hexanoate) copolymer with 5% of poly(3-hydroxyhexanoate), a medium-chain-length polyhydroxyalkanoate.

As used herein an acyl chloride of poly(3-hydroxyoctanoate-co-3-hexanoate) copolymer (PHOHX) refers to the following chemical structure poly(3-hydroxyoctanoate-co-3-hexanoate) copolymer with 5% of poly(3-hydroxyhexanoate) in which the terminal carboxylic acid of the mcl-PHA is an acyl chloride.

As used herein poly-(3-hydroxy-acetylthioalkanoate-co-3-hydroxyalkanoate) (PHACOS) refers to the following chemical structure poly-(3-hydroxy-acetylthioalkanoate-co-3-hydroxyalkanoate) a medium-chain-length polyhydroxyalkanoate, which monomer content was 40% of non-functionalized monomers (3-hydroxyoctanoate, 3-hydroxydecanoate, and 3-hydroxyhexanoate monomers) and 60% of functionalized monomers (3-hydroxy-6-acetylthiohexanoate and 3- hydroxy-4-acetylthiobutanoate monomers). It was obtained through metabolic engeineering and contains thioester groups in the side chain that confer antibacterial activity to PHACOS specifically against *5. aureus* isolates including MRSA.

As used herein an acyl chloride of poly-(3-hydroxy-acetylthioalkanoate-co-3-hydroxyalkanoate) (PHACOS) refers to the following chemical structure poly-(3-hydroxy-acetylthioalkanoate-co-3-hydroxyalkanoate) a medium-chain-length polyhydroxyalkanoate, which monomer content was 40% of non-functionalized monomers (3-hydroxyoctanoate, 3-hydroxydecanoate, and 3-hydroxyhexanoate monomers) and 60% of functionalized monomers (3-hydroxy-6-acetylthiohexanoate and 3- hydroxy-4-acetylthiobutanoate monomers), in which the terminal carboxylic acid of the mcl-PHA is an acyl chloride.

As used herein polyhydroxyalkanoates (PHAs) grafted onto bacterial cellulose is understood as a new polymer in which primary alcohols of bacterial cellulose are bonded to the acyl chlorides of PHA.

As used herein a core-shell particle is understood as a class of particles which contain a core composed of a covalent modified BC-PHA polymer and a shell composed of polyhydroxyalkanoate (PHA).

As used herein a coaxial electrospray device is understood as a technology whose process produces multilayer particles. It consists of a high voltage power supply that confers a positive charge to the syringe needle. A coaxial needle containing two different compartments, one for the inner solution and one for the outer solution. Two syringe pumps, for each solution and a grounded collector.

As used herein an ionic liquid (IL) is understood as a compound composed of ions with melting point below 100°C. In the presente invention, prefeably, the IL is 1-butyl-3-methylimidazolium chloride (BMIMCI) and works as solvent for the different polymers.

As used herein an acyl chloride is understood as an organic compound with a chlorine atom bound to an acyl group. The general formula is RCO-CI. It is prepared by the reaction of the terminal carboxylic acids of the PHA with thionyl chloride.

As used herein flow rate ratio is understood as volume flow rate, is the volume of liquid that the pump travels through the system in a given time. It defines the rate at which a pump can push the liquid through the system.

As used herein outer solution in the context of a coaxial electrospray device is understood as the polymer solution that is pumped through the outer needle, that in this case is a polyester such as PHA, PBAT, or PBS, in IL and dimethyl sulfoxide (DMSO).

As used herein inner solution in the context of a coaxial electrospray device is understood as the polymer solution that is pumped through the inner needle, that in this case is, preferably, covalently modified BC-PHA in IL and DMSO.

As used herein cargo or bioactive element is preferably understood as bacteria and enzymes. That is, the elements encapsulated within these coaxial particles will be bacteria and enzymes with biotechnological applications.

### Description of embodiments of the invention

In the present invention, polyhydroxyalkanoates (PHAs) grafted onto bacterial cellulose were manufactured by first dissolving PHB, poly(3-hydroxyoctanoate-co-3-hexanoate) copolymer (PHOHX) or poly-(3-hydroxy-acetylthioalkanoate-co-3-hydroxyalkanoate) (PHACOS) in an halogenated organic solvent, preferably in dichloromethane (DCM), and mixing it with thionyl chloride under an inert atmosphere, preferably under nitrogen, and the mixture was maintained for a sufficient time, preferably under stirring for 2 h. After this time, the solvent was eliminated or reduced, preferably by evaporating it under reduced pressure till dry. The product obtained was dissolved again in an halogenated organic solvent, preferably DCM, and subsequently, the solvent was evaporated to yield the different acyl chlorides. Then, bacterial cellulose BC was dissolved in an ionic liquid, preferably BMIMCI, at a sufficient time and temperature, preferably 80°C for 5h, and then the acyl chloride dissolved in the organic medium, preferably DMF, was added. The mixture was preferably stirred overnight at that temperature to provide the polyhydroxyalkanoates (PHAs) grafted onto bacterial cellulose. As indicated, this procedure was performed with PHB, and with two mcl-PHAs, poly(3-hydroxyoctanoate-co-3-hexanoate) copolymer (PHOHX) and poly-(3-hydroxy-acetylthioalkanoate-co-3-hydroxyalkanoate) (PHACOS).

Therefore, a first aspect of the invention refers to a method to produce polyhydroxyalkanoates (PHAs) grafted onto bacterial cellulose, by an acylation reaction between bacterial cellulose and acyl chlorides of polyhydroxyalkanoates (PHAs), the method comprising the following steps:
a) Mixing bacterial cellulose dissolved in an ionic liquid with an acyl chloride of PHA; and
b) Optionally Isolating and/or purifying the polyhydroxyalkanoates (PHAs) grafted onto bacterial cellulose.

In a preferred embodiment of the first aspect of the invention, the PHA is selected from the list consisting of polyhydroxybutyrate (PHB), poly(3-hydroxyoctanoate-co-3-hexanoate) copolymer (PHOHX) and poly-(3-hydroxy-acetylthioalkanoate-co-3-hydroxyalkanoate) (PHACOS), preferably the PHA is PHB.

In another preferred embodiment of the first aspect of the invention or of any of its preferred embodiments, prior to step a) the acyl chloride of PHA is prepared by dissolving the PHA in an organic solvent and reacting it with thionyl chloride and optionally isolating or obtaining the resultant product by eliminating or reducing the solvent, i.e. by evaporation.

In another preferred embodiment of the first aspect of the invention or of any of its preferred embodiments, the PHA of step a) is mixed with the bacterial cellulose dissolved in an organic solvent, preferably in dichloromethane (DCM).

In another preferred embodiment of the first aspect of the invention or of any of its preferred embodiments, the ionic liquid is BMIMCI.

A second aspect of the invention refers to polyhydroxyalkanoates (PHAs) grafted onto bacterial cellulose obtained or obtainable by the method of the first aspect of the invention or of any of its preferred embodiments. Preferably, the polyhydroxyalkanoates (PHAs) grafted onto bacterial cellulose are PHB grafted onto bacterial cellulose.

On the other hand, in this invention, new core-shell microparticles based on bacterial cellulose (BC) and polyhydroxyalkanoates (PHAs) have been obtained by coaxial electrospraying. These particles are spherical, reproducible and stable. The core-shell of the particle is composed of a BC-PHA grafted polymer, such as the one indicated in the second aspect of the invention, that ensures a good environment for encapsulating bioactive cargos. The polyhydroxyalkanoates (PHAs) shell provides the thin film that maintains the spherical shape of the particle. It is noted that this shell can be form by any degradable polyester such as a PHA, PBAT or PBS as exemplified in the present invention. The combination of both polymers (core and shell) results in stable microparticles that are designed for the immobilization of the bioactive substance of interest. Moreover, the coating of the core BC-PHA, such as BC-PHB, with PHA or any other degradable polyester such as a PBAT or PBS, helps controlling the rate of release of the encapsulated cargo. As already indicated, these novel particles constitute excellent tools for the encapsulation of bioactive elements.

Therefore, a third aspect of the invention refers to a method to obtain or to produce a core-shell particle comprising:
a. A core made of polyhydroxyalkanoates (PHAs), preferably of polyhydroxybutyrate (PHB), grafted onto bacterial cellulose; and
b. A shell comprising or consisting of a degradable polyester such as a PHA, PBAT or PBS, preferably polyhydroxyalkanoates (PHAs), more preferably of polyhydroxybutyrate (PHB).
wherein the method comprises using coaxial electrospray to pass through the inner capillary (the core) of the coaxial needle a solution of polyhydroxyalkanoates (PHAs), preferably of polyhydroxybutyrate (PHB), grafted onto bacterial cellulose dissolved in an ionic liquid (IL) and through the external part (shell) of the coaxial needle, a solution of a degradable polyester such as a PHA, PBAT or PBS, preferably polyhydroxyalkanoates (PHAs), more preferably of polyhydroxybutyrate (PHB), dissolved in IL to provide core-shell particles and optionally isolating and/or purifying said particles.

Preferably, the method of the third aspect of the invention comprises using a coaxial electrospray device to obtain the particle, wherein the coaxial electrospray device comprises a collector support or plate (such as an aluminium plate containing water), a voltage power supply, a coaxial needle and at least two microsyringe pumps to pump the polymer solutions to the coaxial needle, and wherein the method comprises passing through the inner capillary (the core) of a coaxial needle of the coaxial electrospray device a solution of polyhydroxyalkanoates (PHAs), preferably of polyhydroxybutyrate (PHB), grafted onto bacterial cellulose dissolved in an ionic liquid (IL) and through the external part (shell) of the coaxial needle, a solution of a degradable polyester such as a PHA, PBAT or PBS, preferably polyhydroxyalkanoates (PHAs), more preferably of polyhydroxybutyrate (PHB), dissolved in IL to provide core-shell particles onto the collector plate or support and optionally isolating and/or purifying said particles.

In a preferred embodiment of the third aspect of the invention, the flow rate ratio of the outer solution is from 0.05-0.2 mL/h, preferably about 0.05 mL/h, and of the inner solutions is from 0.2-0.1 mL/h, preferably 0.2 mL/h, wherein it is noted that the lower and upper limits of these ranges are deemed included within the range.

In another preferred embodiment of the third aspect of the invention or of any of its preferred embodiments, the polyhydroxyalkanoates (PHAs), preferably polyhydroxybutyrate (PHB), grafted onto bacterial cellulose is obtained by the method the first aspect of the invention or of any of its preferred embodiments.

In another preferred embodiment of the third aspect of the invention or of any of its preferred embodiments, the outer solution is prepared by dissolving the degradable polyester such as a PHA, PBAT or PBS, preferably polyhydroxyalkanoates (PHAs), more preferably polyhydroxybutyrates (PHB), in an ionic liquid such as BMIMCI, and the inner solution is prepared by dissolving the polyhydroxyalkanoates (PHAs), preferably polyhydroxybutyrate (PHB), grafted onto bacterial cellulose in an ionic liquid such as BMIMCI, and wherein, much preferably, each of the solutions are further mixed with a cosolvent to enhance the electrosprayability of both solutions, such as DMSO (Dimethyl sulfoxide), acetone or DMF (Dimethylformamide).

A fourth aspect of the invention refers to a method of encapsulating a cargo in a core-shell particle comprising:
a. A core made of polyhydroxyalkanoates (PHAs), preferably of polyhydroxybutyrate (PHB), grafted onto bacterial cellulose; and
b. A shell consisting of a degradable polyester such as a PHA, PBAT or PBS, preferably polyhydroxyalkanoates (PHAs), more preferably of polyhydroxybutyrate (PHB);
the method comprising using coaxial electrospray to pass through the inner capillary (the core) of the coaxial needle two solutions, one solution of polyhydroxyalkanoates (PHAs), preferably of polyhydroxybutyrate (PHB), grafted onto bacterial cellulose dissolved in an ionic liquid (IL) and a further solution comprising the cargo in a suitable medium, so that both solutions come into contact in the inner capillary of the coaxial needle, and through the external part (shell) of the coaxial needle, a solution of a degradable polyester such as a PHA, PBAT or PBS, preferably polyhydroxyalkanoates (PHAs), more preferably of polyhydroxybutyrate (PHB), in IL, to provide core-shell particles encapsulating the cargo and optionally isolating and/or purifying said particles. In a preferred embodiment of the fourth aspect of the invention, the method comprises using a coaxial electrospray device to obtain the particle, wherein the coaxial electrospray device comprises a collector support or plate (such as an aluminium plate containing water), a voltage power supply, a coaxial needle and at least three microsyringe pumps to pump the polymer solutions to the coaxial needle, and wherein the method comprises passing through the inner capillary (the core) of a coaxial needle of the coaxial electrospray device two solutions, each with its corresponding pump, one solution of polyhydroxyalkanoates (PHAs), preferably of polyhydroxybutyrate (PHB), grafted onto bacterial cellulose dissolved in an ionic liquid (IL) and a further solution comprising the cargo in a suitable medium, so that both solutions come into contact in the inner capillary of the coaxial needle, and through the external part (shell) of the coaxial needle, a solution of a degradable polyester such as a PHA, PBAT or PBS, preferably polyhydroxyalkanoates (PHAs), more preferably of polyhydroxybutyrate (PHB), dissolved in an IL, to provide the core-shell particle onto the collector plate or support and optionally isolating and/or purifying said particles.

In another preferred embodiment of the fourth aspect of the invention or of any of its preferred embodiments, the flow rate ratio of the outer solution is from 0.05-0.2 mL/h, preferably about 0.05 mL/h, of the inner solutions is from 0.2-0.1 mL/h, preferably about 0.2 mL/h, and of the solution comprising the cargo is from 0.2-0.5 ml/h, preferably about 0.5 mL/h, wherein it is noted that the lower and upper limits of these ranges are deemed included within the range.

In another preferred embodiment of the fourth aspect of the invention or of any of its preferred embodiments, the polyhydroxybutyrate (PHB) grafted onto bacterial cellulose is obtained by the method of the first aspect of the invention or of any of its preferred embodiments.

In another preferred embodiment of the fourth aspect of the invention or of any of its preferred embodiments, the cargo or bioactive elements are selected from the list consisting of enzymes or bacteria with biotechnological application, e.g. lysozymes, oxydoreductases, lipases or depolymerases, or *Pseudomonas putida, Bdellovibrio bacteriovorus, Escherichia coli, Lactobacillus* or *Bifidobacterium,* among others, respectively. Any further suitable probiotic microorganism could be included in this embodiment.

A fifth aspect of the invention refers to core-shell particle comprising, consisting essentially of or consisting of:
a. A core made of PHA, preferably polyhydroxybutyrate (PHB), grafted onto bacterial cellulose; and
b. A shell consisting of a degradable polyester such as a PHA, PBAT or PBS, preferably polyhydroxyalkanoates (PHAs), more preferably of polyhydroxybutyrate (PHB).

A sixth aspect of the invention refers to a core-shell particle comprising, consisting essentially of or consisting of:
a. A core made of PHA, preferably polyhydroxybutyrate (PHB), grafted onto bacterial cellulose; and
b. A shell consisting of a degradable polyester such as a PHA, PBAT or PBS, preferably polyhydroxyalkanoates (PHAs), more preferably of polyhydroxybutyrate (PHB).
wherein the core-shell particle as obtained by the method of the fourth aspect of the invention or of any of its preferred embodiments. In particular, by a method that comprises using coaxial electrospray to pass through the inner capillary (the core) of the coaxial needle at least two solutions, one solution of polyhydroxyalkanoates (PHAs), preferably of polyhydroxybutyrate (PHB), grafted onto bacterial cellulose dissolved in an ionic liquid (IL) and a further solution comprising the cargo in a suitable medium, so that both solutions come into contact in the inner capillary of the coaxial needle, and through the external part (shell) of the coaxial needle, a solution of a degradable polyester such as a PHA, PBAT or PBS, preferably polyhydroxyalkanoates (PHAs), more preferably of polyhydroxybutyrate (PHB), in IL, to provide core-shell particles encapsulating the cargo and optionally isolating and/or purifying said particles. Preferably, the method comprises using a coaxial electrospray device to obtain the particle, wherein the coaxial electrospray device comprises a collector support or plate (such as an aluminium plate containing water), a voltage power supply, a coaxial needle and at least three microsyringe pumps to pump the polymer solutions to the coaxial needle, and wherein the method comprises passing through the inner capillary (the core) of a coaxial needle of the coaxial electrospray device two solutions, one solution of polyhydroxyalkanoates (PHAs), preferably of polyhydroxybutyrate (PHB), grafted onto bacterial cellulose dissolved in an ionic liquid (IL) and a further solution comprising the cargo in a suitable medium, so that both solutions come into contact in the inner capillary of the coaxial needle, and through the external part (shell) of the coaxial needle, a solution of polyhydroxyalkanoates (PHAs), preferably of polyhydroxybutyrate (PHB), dissolved in an IL, to provide the core-shell particle onto the collector plate or support and optionally isolating and/or purifying said particles.

A seventh aspect of the invention refers to the core-shell particle according to the fifth or sixth aspect of the invention or any of its preferred embodiments, for encapsulating cargos or bioactive elements, such as those selected from the group consisting of enzymes or bacteria with biotechnological application, e.g. lysozymes or depolymerases, or Pseudomonas putida or Bdellovibrio bacteriovorus, , Escherichia coli, Lactobacillus or Bifidobacterium (or any further probiotics), among others, respectively.

The following examples are merely to illustrate the present invention but do not limit the same.

### Examples

### Materials and methods

### Materials

Polyhydroxybutyrate (PHB), was supplied by Sigma-Aldrich (CAS: 29435-48-1; 363502). BC pellicles were produced in static culture using the bacterial strain *Komagataeibacter medellinensis* ID13488 as previously described (Hernández-Arriaga et al., 2019). 1-butyl-3-methylimidazolium chloride (BMIMCI); 99% (CAS: 79917-90-1; AB 289585) was purchased from abcr GmbH (Karlsruhe, Germany). DMSO (CAS: 67-68-5; 1029521000) was supplied by Sigma-Aldrich, sulfuric acid (CAS: 7664-93-9; 30743-1L-M) was purchased from Sigma-Aldrich, chloroform (CAS: 67-66-3; 1024451000) was supplied by Sigma-Aldrich, 3-methylbenzoic acid (CAS: 99-04-7; 89890) was purchased from Sigma-Aldrich.

### Synthesis of BC-PHA and methanolysis reaction

PHB (1 g) was dissolved in dichloromethane (DCM) (40 mL) and cooled to 0 °C. 2 eq. of thionyl chloride (2 mL) were added under nitrogen and the mixture was maintained under stirring for 2 h. After this time, the solvent was evaporated under reduced pressure to dryness. The product obtained was dissolved again in DCM, and subsequently, the solvent was evaporated to yield the CI-PHB. Then, BC (500 mg) cut into small pieces was dissolved in 50 mL of BMIMCI at 80 °C for 5 h, and the CI-PHB dissolved in 10 mL of DMF was added. The mixture was stirred overnight at that temperature. Then, the mixture was dialyzed in water for 72 h. After that time, the sample was lyophilized. The resulting solid was suspended in CHCl₃ and stirred overnight at room temperature to dissolve the excess of PHB-Cl. The solid was filtered and washed with chloroform. The obtained white solid was dried. This procedure was repeated with two mcl-PHAs, poly(3-hydroxyoctanoate-co-3-hexanoate) copolymer (PHOHX) and poly-(3-hydroxy-acetylthioalkanoate-co-3-hydroxyalkanoate) (PHACOS), an antimicrobial biopolyester using the same proportions.

Following the same protocol, PHOHX and PHACOS were also grafted onto BC.

To quantify the PHB-CI grafted onto the BC, the methanolysis reaction and subsequent GC-MS analysis were carried out. The procedure followed was previously described with some modifications (De Eugenio et al.). To about 2 mg of the dried grafted polymer, 2 ml of methanol containing 3% sulfuric acid and 2 mL of chloroform containing 0.5 mg/ml 3-methylbenzoic acid as internal standard were added. The suspension was then incubated at 100 °C for 5 h. After cooling, 1 ml of distilled water was added to the mixture and the organic phase was washed twice to remove the remaining sulfuric acid. Finally, sodium sulfate was added to remove the water and the organic phase was analysed by GC-MS.

An Agilent (Waldbronn, Germany) series 7890A coupled with a 5975C MS detector (El, 70 eV) and a split-splitless injector were used for analysis. An aliquot (1 µl) of organic phase was injected into the gas chromatograph at a split ratio of 1:50. A DB-5HTDB-5HT column (400°C: 30 m x 0.25 mm x 0.1 µm film thickness) was used. Helium was used as carrier gas at a flow rate of 0.9 ml min⁻¹. The injector and transfer line temperature were set at 275 °C and 300 °C respectively. The oven temperature program was initial temperature 80 °C for 2 min, then from 80 °C up to 175 °C at a rate of 5 °C min⁻¹, for efficient separation of peaks. EI mass spectra were recorded in full scan mode (m/z). The monomer of PHB and the internal standard (3MB) weredetected with this program.

### Preparation of electrospraying solutions

The outer solution was prepared by dissolving 50 mg of PHB in 10 mL of BMIMCI at 80°C for 24h. Then, 1 ml of the solution of 0.5 mg/mL of PHB was mixed with 0.2 mL of DMSO. In the case of the inner solution, 50 mg of the polymer BC-PHB obtained previously were dissolved in 10 mL of BMIMCI at 80°C for 24h. Subsequently, 1 ml of the solution of 0.5 mg/ml of BC-PHB was mixed with 0.2 mL of DMSO. Each of the solutions was subjected to an IKA Ultra-turrax disperser, trying to remove possible lumps and homogenise the mixture, and then sonicated for 10 minutes to eliminate the remaining bubbles.

### Electrospraying set-up / Preparation of the particles

Electrospraying was performed on a homemade vertical spinning apparatus with an aluminium collector (Fig 1). The equipment contains a high voltage power supply (Slassam High Voltage Inc. Series EL) set at 30 kV to confer a constant positive charge to the syringe needle. The polymer solutions were first loaded into a 1mL BD plastic syringe (inner diameter 4.7 mm). Two programmable microsyringe pumps (Harvard Apparatus 70-2208) were used to pump the polymer solutions to the coaxial needle. The inner diameter of the coaxial needle is 0.305 mm and the outer diameter is 0.559 mm. The distance between the needle tip and the grounded collector plate was set up at 10 cm. The flow rates of the different solutions were varied to find the optimal parameters, the inner solution was conducted at 0.1-0.2 mL/min and the external solution at 0.05 - 0.2 mL/min. All experiments were conducted in a closed chamber at room temperature and under atmospheric pressure. When the particles spread from the needle and fell onto the aluminium plate containing water, the particle solidified by releasing the BMIMCI into the water. The particles were washed five times with water facilitating the removal of the BMIMCI.

### characterization

### 2.1.1. ATR-FTIR analysis

Attenuated total internal reflectance Fourier transform infrared (ATR-FTIR) characterization of the BC-PHB material and the particles were carried out in a Perkin-Elmer (Spectrum One) spectrometer equipped with an ATR accessory. Spectra were recorded in the range from 4000 to 400 cm⁻¹ by 32 scans and with a resolution of 4 cm⁻¹.

### 2.1.2. Epifluorescence microscopy

The morphology and the diameter of the particles were routinely checked using an epifluorescence microscope (Nikon Eclipse E400 equipped with a Nikon Digital Sight DS-2Mv camera). In order to analyse the different layers of the particles, Calcofluor White M2R (Fluorescent Brightener 28, Sigma-Aldrich, EX/EM: 535/617) was incorporated into the inner solution dyeing it blue. The superposition of images from the different channels (blue and phase contrast) allows us the observation of layers. Contrast and bright images were adjusted for improved observation. This procedure was repeated several times to analyse the maximum number of particles and to obtain a particle size range.

### 2.1.3. Thermogravimetric analysis (TGA)

Thermogravimetric analyses (TGA) of the BC-PHB material and the particles were performed on TGA Q500 (TA Instruments) thermogravimetric analyser, under dynamic nitrogen at a heating rate of 10 °C/min working in a range of 25 - 600 °C. A known mass of each sample was weighed and the weight loss was recorded over temperature. The extrapolated onset temperature (Tonset), denotes the temperature at which the weight loss starts, and temperature at peak maximum (Tmax) in the DTG curve, shows the maximum decomposition rate of a component of the material, was measured.

### 2.1.4. Environmental scanning electron microscopy (ESEM).

The morphology of the particles was examined by environmental scanning electron microscopy (ESEM) using a Philips XL 30 that employs a Schottky-based gun design using a point-source cathode of tungsten which has a surface layer of zirconia (ZrO₂), with an accelerating voltage of 25 kV. Previous to the analysis, all samples were sputter-coated with gold (Polaron SC7640, Quorum Technologies Ltd., England).

### 2.1.5. Confocal laser scanning microscopy

The internal structure of BC was observed under confocal laser scanning microscopy (CLSM) using a Leica TCS SP5 equipped with 8 laser lines. Particles were dyed with Calcofluor White M2R (Fluorescent Brightener 28, Sigma-Aldrich, EX/EM: 380/475) was used for BC; and Nile Red (Sigma-Aldrich, EX/EM: 550/640) for PHB. Images were acquired each 5 µm at 10x magnification, while laser intensity and gain were compensated during laser penetration to allow for a good resolution throughout the entire thickness of the sample. Several particles were suspended in 1 mL phosphate-buffered saline (PBS) and supplemented with 100 µL of a 35 µg/mL calcofluor solution and 100 µL of a 10 µg/mL nile red solution.

### 3. Results and discussion

### 3.1. Synthesis and characterization of BC-PHB materials

As mentioned above, BC has great physical and chemical properties due to its three-dimensional structure, but the lack of thermoplasticity and highly hydrophilicity make it undesirable for some applications. Modification of their properties can be carried out by different tecniques such as blending, cross-linking, curing or grafting. Therefore, considering that the aim of the work is to obtain stable particles that provide an ideal environment for microorganisms or bioactive cargos, it is necessary to confer BC with the necessary characteristics. There are many examples of blends between BC and PHAs, but for the electrospray technique anuniform and consistent material is needed to obtain homogeneous and reproducible particles, with improved compatibility between both polymers and maintaining the intrinsic properties of each of them. In this sense, grafting the two polymers is a promising technique to achive these characteristics. Previous work obtained BC-PHA grafted polymer by different pathways. On the one hand, Samain et al [Journal of Applied Polymer Science, 121(5), 2011, 1183-1192] first degrade PHA to lower molecular weight oligomers that will be converted to acyl chlorides to be grafted onto cellulose. On the other hand, Wei et al [Biomacromolecules 2015, 16, 1040-1049] grafted both polymers by in situ radical initiation via reaction extrusion of PHB and then grafting onto cellulose. In the first case, the final carboxyl group of the main PHA chain is bonded to the cellulose via the primary alcohols, but in the second example, the new bond is formed via the tertiary carbon of the PHA and the CH₂ of the cellulose, and this grafting reaction occurred preferentially in the amorphous regions of both polymers. In our casethe BC used is with high crystallinity (> 85%), so an ionic liquid (IL) is added to achieve greater modification of the polymer. The use of IL in the chemical transformation ensures a larger surface area for polymer modification. Ionic liquids have been widely used to dissolve and functionalize diverse materials such as cellulose. Thus, on one side, PHB is converted into the corresponding acyl chloride using SOCl₂, and on the other side, it is necessary for the BC to be stirred at 85-90°C in IL for at least 5 hours to ensure the penetration of IL into the cellulose network allowing the subsequent reaction with Cl-PHB.

To determine the PHB grafted onto the BC, the methanolysis reaction was carried out as described above. The amount of C4 monomer (3-hydroxybutyric acid methyl ester) detected was 31%. By adjusting the equivalents of Cl-PHB added to the final coupling reaction and the reaction-time, the percentage of grafted polymer can be handled.

The washing step of the resulting graft polymer is the key to remove the unreacted CI-PHB. The BC-PHB polymer was confirmed by ATR-FTIR spectroscopy, ESEM and TGA.

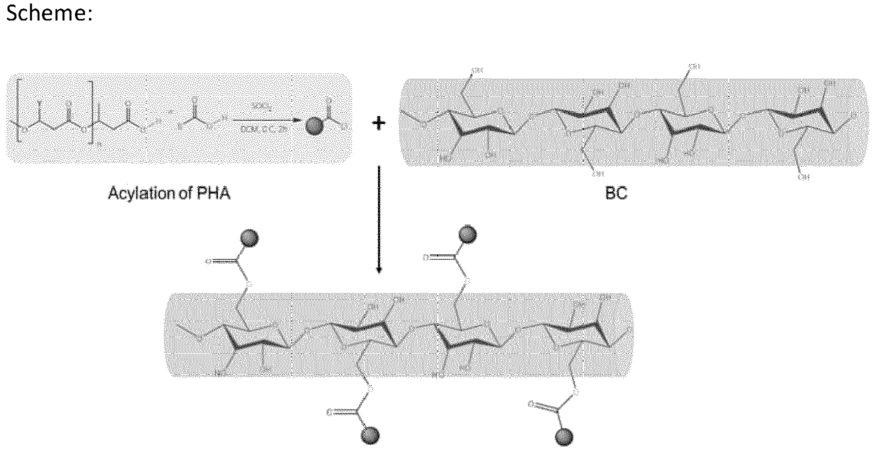

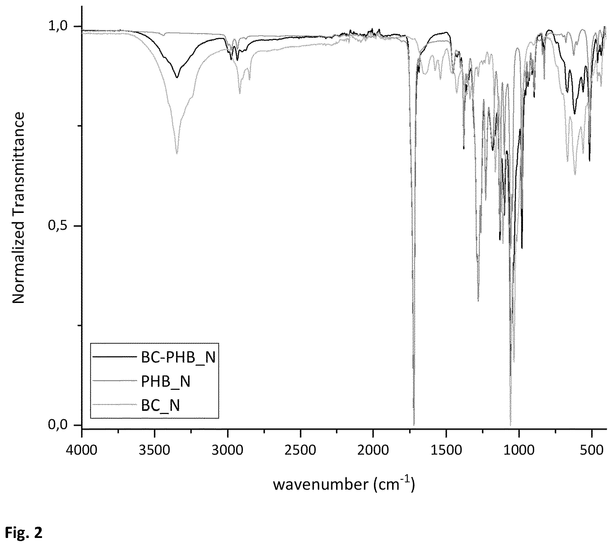

Analysing the BC-PHB ATR-FTIR spectra (Fig. 2) bands related to both polymers were observed. The ones associated with the BC were the broad band at 3358 cm⁻¹, which is ascribed to the hydrogen-bonded OH stretching band (BC), indicating that new hydrogen bonds are being formed. The peak at 1646 cm⁻¹ is related to the OH of water absorbed from cellulose. The peak at 1162 cm⁻¹ corresponds to the C-O-C asymmetric stretching. The bands at 1054 cm⁻¹ and 1029 cm⁻¹ are associated with the C-O stretching. The characteristic band at 2964 to 2874 cm⁻¹ shows the presence of -CH (alkanes) bonding which is present in both polymers. The bands related to the PHB are the peak at 1722 cm⁻¹, which corresponds to the carbonyl group of the ester group of the PHB. The intensity of this band also indicates a high proportion of this polymer in the final material. And the band observed at 1280 cm⁻¹ corresponds to the C-O bonding.

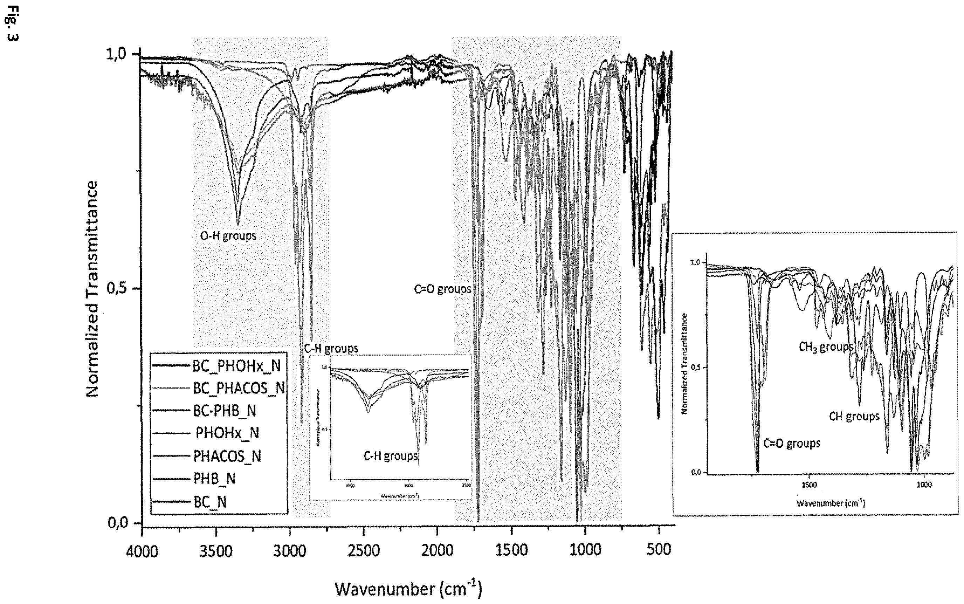

When analysing the ATR-IR spectrum of the graft between BC and mcl-PHA (Fig. 3), the same results are observed as in the case of the PHB graft. Signals from the carbonyl (1739 - 1722 cm⁻¹) and CH₂ (2934 - 2869 cm⁻¹) groups are observed, confirming that the reaction worked, but unlike the PHB graft, less polyhydroxyalkanoate reacts with BC in the mcl-PHAs.

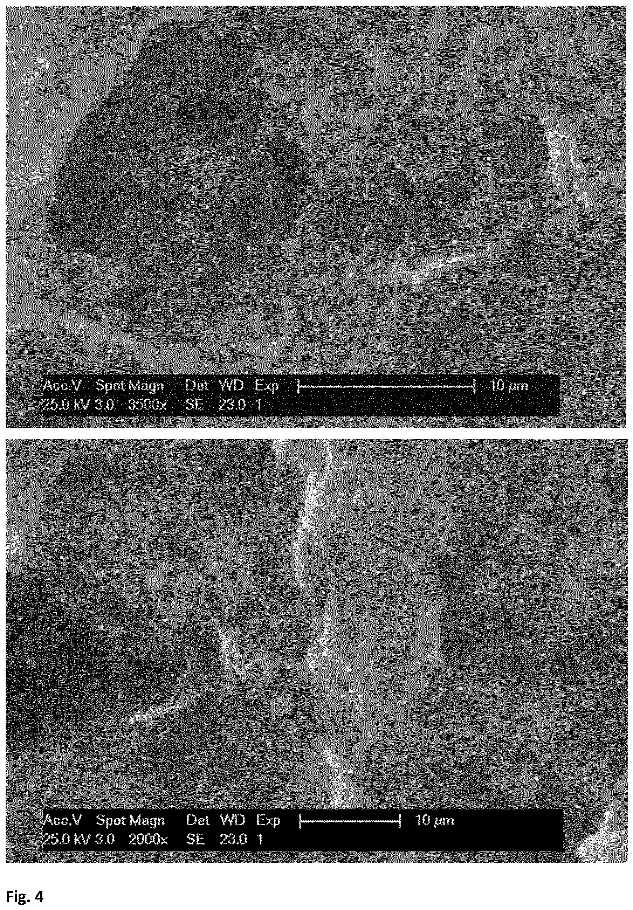

SEM micrographs of the lyophilized grafted material BC-PHB showed the granules homogeneously dispersed in the porous BC matrix (Fig. 4). This granule formation is because of the hydrophobic nature of the PHB.

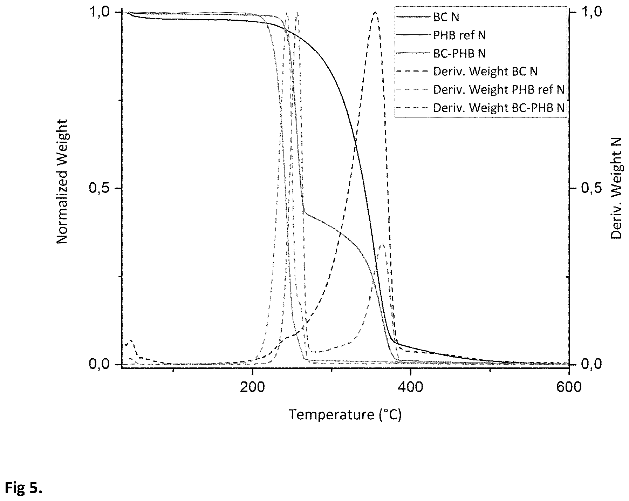

Thermal stability of the BC-PHB graft was analysed by TGA. Two weight loss stages were observed in the first derivative of the weight loss curve versus temperature (DTG) curve of the sample (Fig. 5). The initial weight loss occurred at 257 °C and corresponds to 55 % of the total loss, which belongs to the degradation of the PHB in the sample. On the other hand, the second weight loss was observed at 364 °C and was due to the decomposition of BC at 42% of the total loss. Comparison of the data of the covalently bonded material with the reference polymers (Table 1) reveals that the onset temperature of the grafted material increased compared to the commercial PHB separately. This increment in the temperature at which the material starts to degrade is due to the influence of the BC, at the same time as this graft increases the temperature at which the maximum degradation of the PHB is reached (from 355 °C to 364 °C). Therefore, the polymer obtained is more temperature stable than the original polymers separately.

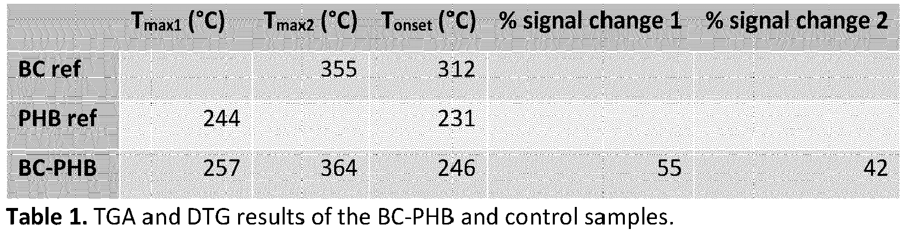

### 3.2. Preparation of BC-PHA particles by electrospraying

The idea of using a covalently modified BC-PHB core stems from earlier proofs of concept carried out in the laboratory. Firstly, a simple electrospray system was developed using BC and PHB mixed in IL and a co-solvent as a polymer solution. The results obtained showed heterogeneous particles with an uncontrolled morphology, shape and size (Fig 6a). For that reason, grafting between both polymers emerged as an alternative to obtain good homogeneity and control the shape and size of the particles. Electrospraying of this new solution resulted in homogeneous particles but their size and shape were not fully controlled (Fig 6b).

As mentioned above, in this invention one of the aims is to obtain stable and reproducible particles to encapsulate bioactive agents or microorganisms in an ideal environment provided by the BC. Therefore, to control the shape and size of this grafted polymer, the solution is the coaxial electrospray, where the core solution is the grafted polymer and the shell solution is a thin layer of PHB, sufficient to contain the grafted BC and confer the required reproducible particle shape and size characteristics. In addition, this thin PHB layer will help control the release of the cargo contained in the particle. It should be noted that the compatibility between the two layers is due to the PHB bonded to the BC, which acts as a compatibiliser between the two polymers, making the resulting particle stable.

The choice of solvent for the electrospray process is important because it is a parameter in the final particle morphology and structure. As described previously, polymer solutions used IL as a solvent. The solution of BC-PHB and PHB polymers in the IL results in a very viscous solution, so it is necessary to add a cosolvent to enhance the electrosprayability of both solutions. The cosolvent is DMSO which enters the gaps between the chains and the IL improves the mobility of the chains due to a weaker interaction with them. Consequently, the BC chains can easily elongate and fibrillate during the process.

After preparing the solutions and loading them into the syringes, different parameters can be adjusted in the system to optimise the morphology and structure of the final particles. The flow rates of both solutions, the needle height and the electrospray voltage were modified to obtain the final parameters that gave the best results. The needle height was set at 10 cm and the voltage at 30 kV. On the other hand, depending on the flow rate of the solutions, different particle sizes are obtained (Fig. 7). Keeping the internal flow rate between 0.2 - 0.1 mL/h, the external flow rate was varied from 0.2 to 0.05 mL/h to analyse how the thickness of the external layer affects the particle. When the external flux is set to 0.2 mL/h, the particles are not perfectly rounded, and some aggregates of PHB can be observed on the outer membrane (Fig 7c.). The thickness of this layer can be analysed when the contrast phase merges with the blue field after adding calcofluor to the inner polymer solution, and it is observed that it is not regular throughout the particle.

When the flow rate is reduced to 0.1 mL/h, fewer aggregates are observed in the outer layer and the particle morphology is more reproducible (Fig 7b). But the best results and reproducibility were obtained when the external flow rate was set at 0.05 mL/h (Fig. 7a and 8). In this case, perfect, spherical and stable particles were obtained, with an outer membrane of regular and thin thickness.

### 3.3. Preparation of BC-PHB/PBAT and BC-PHB/PBS particles by electrospraying

Particles were prepared with a PBAT (Polybutylenadipat-terephthalat) or PBS shell under the same conditions as explained above. The main problem was the dissolution of these polymers in BMIMCI, as it is described that they dissolve best in phosphate and not halogen IL. To solve it and using the same conditions for all polymers, PBAT and PBS were first dissolved in chloroform, IL was added and the chloroform evaporated, obtaining the polymer solution in IL at the desired concentration. Then, following the electrospray procedure described above and setting the internal flow rate at 0.2 mL/h and the external flow at 0.05 mL/h, spherical particles were obtained.

### 3.4. Particles characterization

Microscopy can be used as a method of particle size analysis, since the image of a particle seen under the microscope is two-dimensional and an estimate of the particle size must be made from this image. For each external flow, successive measurements of different particles are made to determine the relative number of particles in each of the size classes. These represent the size distribution by number from which it is possible to calculate the volume distribution.

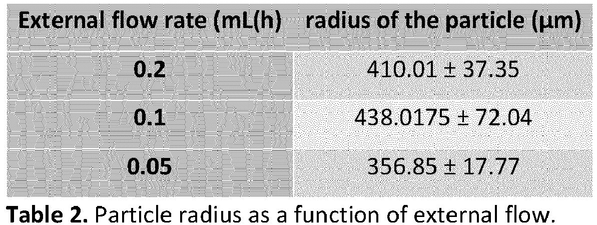

The particle radius is approximately 356.85 µm, with a low deviation from the distribution in the case of the lowest external polymer flow (Table 2). Both particle size and deviation increase at higher fluxes, as in these cases a greater variety of radii can be found, as well as particles that are not perfectly spherical due to PHB accumulations in their outer layer.

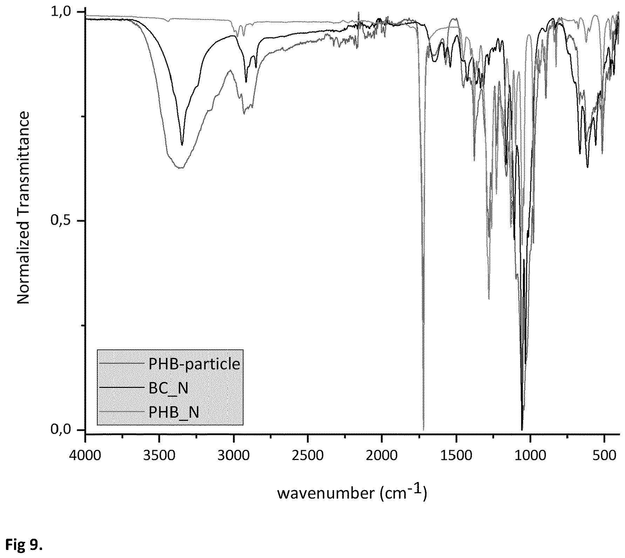

The ATR-FTIR spectrum of the PHB shell particles (Fig. 9) shows the same bands as in the case of BC-PHB grafted polymer. The more representative peaks are the ones corresponding to the carbonyl group of the ester group of the PHB at 1722 cm⁻¹, the CO-C asymmetric stretching at 1162 cm⁻¹, the hydrogen-bonded OH stretching band at 3358 cm⁻¹, the C-O stretching at 1054 cm⁻¹ and 1029 cm⁻¹, the C-O bonding at 1280 cm⁻¹ and the presence of -CH (alkanes) bonding at 2964 to 2874 cm⁻¹.

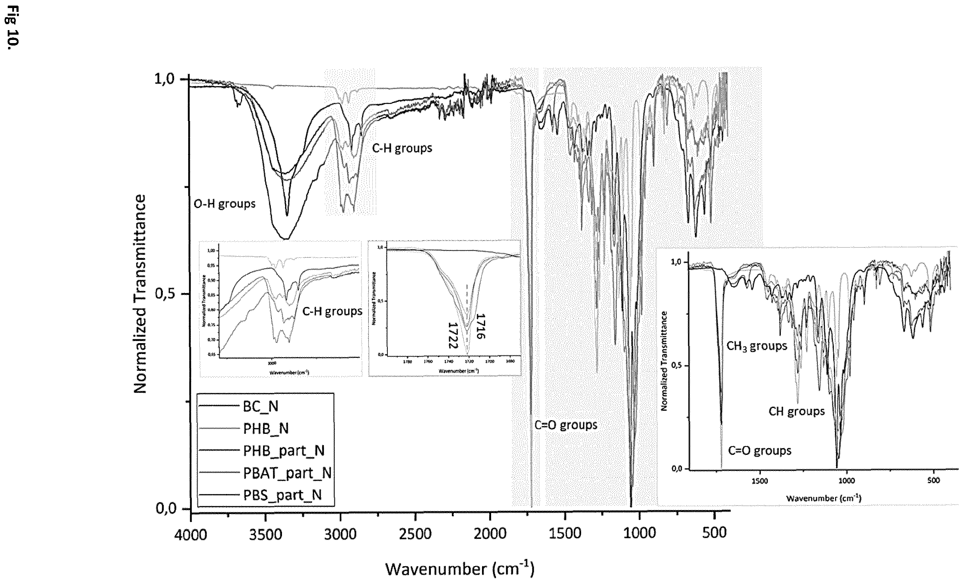

Analysis of ATR-FTIR particles (Fig. 10) with PBAT or PBS shells showed similar results as in the case of PHB shells, as the contribution of polymer of the outer layer is very small. But, looking more closely at the carbonyl region of the ester group at 1722 cm⁻¹, the band has shoulders due to the contribution of the carbonyl groups of PBAT and PBS.

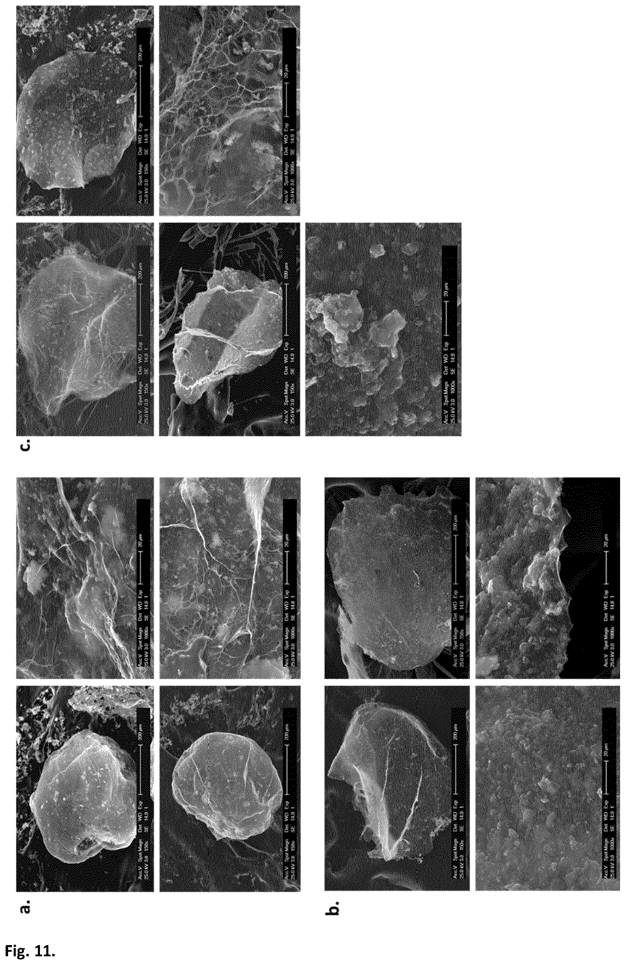

SEM was used to characterize the morphology of the different microparticles obtained. SEM images (Fig. 11) show a less porous surface morphology. Zheng et al. observed this phenomenon earlier and it is due to the rapid outflow of the IL when the particle is exposed to the anti-solvent in the collector, water in this case. The outer layer shows a thin film with granules or hydrophobic polymer accumulation (PHB, PBAT or PBS) on the inner layer. In the case of PBAT or PBS particles, these accumulations are much higher than in the PHB case, probably due to better compatibilization with the particle core.

Thermal analyses of the particles revealed that in the case of a PHB shell, both onset and maximum temperatures decrease compared to that of commercial PHB or grafted BC-PHB, while in the case of particles with a PBAT or PBS shell, the maximum temperature increases compared to PHB particles or covalently modified BC-PHB, but the onset temperature increases compared to commercial PHB but not as much as that of the grafted polymer (Table 3).

This means that although the peak corresponding to PBAT or PBS cannot be observed in the particles due to the minimal amount of both polymers in them, it is sufficient to see an effect on the temperatures because of the high degradation temperatures of both polymers individually (PBAT and PBS).

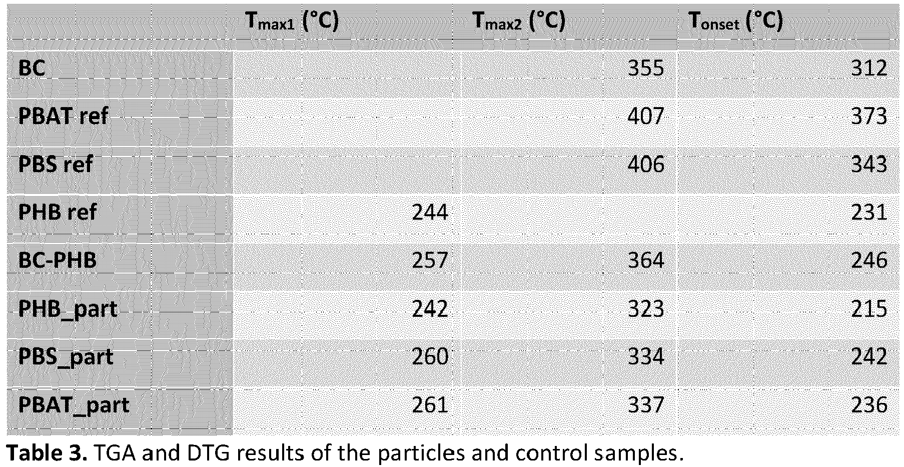

https://www.mdpi.com/2073-4360/12/10/2317/htm

### Ref: Properties of Biodegradable Films Based on Poly(butylene Succinate) (PBS) and Poly(butylene Adipate-co-Terephthalate) (PBAT) Blends

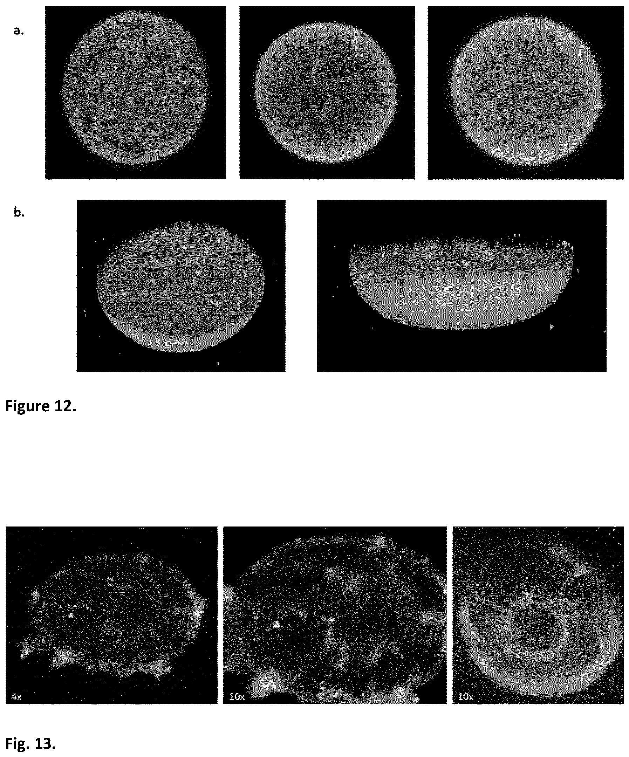

The internal structure of the particles was analysed with CLSM. The microparticle has a radius of about 400 µm, so it is impossible to have a 3D reconstruction of the whole particle, but it is possible to have a section of about 200 µm (Fig 12). To differentiate PHB from BC in the polymer matrix, CLSM was used in conjugation with two fluorescent dyes. The PHB in the particle can be seen in green, both the PHB grafted onto the BC and the PHB on the outer membrane, showing a homogeneous structure.

### Proof of concept by encapsulating bacteria

To test whether this model is suitable for encapsulating bacteria, a third solution was incorporated inside the coaxial needle, as shown in figure 1. This third solution consisted of a *Pseudomonas putida* Pp08_225 culture at an optical density (OD) of 15 in 0.1% phosphate-buffered saline solution (PBS). It is a bacterium that was constructed in our laboratory following the procedure described by (Zobel et al. 2015) that express the green fluorescent protein *msfgfp.* First, *P. putida* was precultured overnight in LB at 30 °C and 200 rpm. Cells were washed with PBS and resuspended in PBS at an optical density (OD) of 15 at 600 nm. The reason for this high OD is that it allows the introduction of a large amount of bacteria in very few µL. Inside the needle, the BC-PHB solution in IL and the *P. putida* solution in PBS come into contact, initiating the release of IL into PBS, so it is necessary that the contact between the two solutions is fast and in the smallest possible volume of PBS, so that the polymer does not precipitate. Therefore, keeping the flow rates of the polymeric solutions as above and setting the flow rate of the bacterial solution between 0.2-0.5 ml/h, spherical particles are again obtained which and washed with PBS five times. These particles were observed by epifluorescence microscopy at the time of collection and by confocal microscopy at 4h and 24 hours after production.

Epifluorescence microscopy shows that the particles exhibit a high intensity green fluorescence indicating that there were a large number of cells in the particle (Fig. 13). From these images we cannot tell whether the bacteria were inside or attached to the particle. For this reason, we analysed the particles by CLSM.

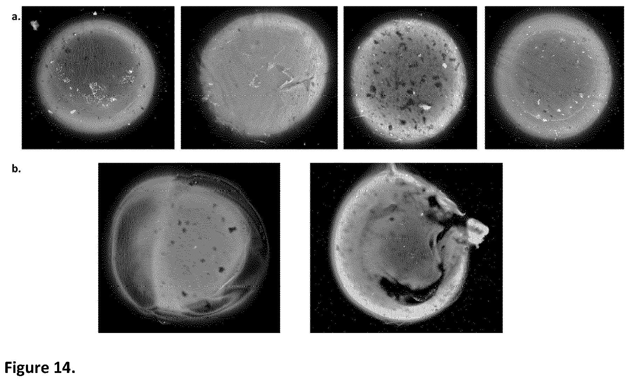

The CLSM images showed a large number of particles attached to the particle surface at 4h (Fig. 14a), and after 24h the number of particles decreased, showing some of them inside the particle (Fig. 14b). These experiments have to be repeated by fine-tuning the conditions to ensure that all IL is removed from the particle, which was an important factor that could affect the viability of the bacteria.

## Claims

1. A method to produce polyhydroxyalkanoates (PHAs) grafted onto bacterial cellulose, by an acylation reaction between bacterial cellulose and acyl chlorides of polyhydroxyalkanoates (PHAs), the method comprising the following steps:
a) Mixing bacterial cellulose dissolved in an ionic liquid with an acyl chloride of PHA; and
b) Optionally Isolating and/or purifying the chemically modified hydrophobized bacterial cellulose, in particular the PHAs grafted onto the bacterial cellulose.

2. The method of claim 1, wherein the PHA is polyhydroxybutyrate (PHB).

3. The method of claim 1 or 2, wherein prior to step a) the acyl chloride of PHB is prepared by dissolving the PHA in an organic solvent and reacting it with thionyl chloride and optionally isolating or obtaining the resultant product by eliminating or reducing the solvent, i.e. by evaporation.

4. The method of any of claims 1 to 3, wherein the ionic liquid is BMIMCI (1-butyl-3-methylimidazolium chloride).

5. The method of any of claims 1 to 4, wherein the acyl chloride of PHA is mixed with the bacterial cellulose dissolved in an ionic liquid, dissolved or suspended in an organic solvent.

6. The PHAs grafted onto bacterial cellulose obtained by the method of any of claims 1 to 5.

7. A method to obtain a core-shell particle comprising:
a. A core made of PHAs, preferably of PHB, grafted onto bacterial cellulose; and
b. A shell comprising or consisting of a degradable polyester such as a PHA, PBAT ((Polybutylenadipat-terephthalat) or PBS (poly(butylene succinate), preferably PHAs, more preferably of PHB;
wherein the method comprises using coaxial electrospray to pass through the inner capillary (the core) of the coaxial needle a solution of PHAs, preferably of PHB, grafted onto bacterial cellulose dissolved in an ionic liquid (IL) and through the external part (shell) of the coaxial needle, a solution of a degradable polyester such as a PHA, PBAT or PBS, preferably PHAs, more preferably of PHB, dissolved in IL to provide core-shell particles and optionally isolating and/or purifying said particles.

8. A method to obtain a core-shell particle comprising:
a. A core made of PHAs, preferably of PHB, grafted onto bacterial cellulose; and
b. A shell consisting of a degradable polyester such as a PHA, PBAT or PBS, preferably PHAs, more preferably of PHB;
wherein the method comprises using a coaxial electrospray device to obtain the particle, wherein the coaxial electrospray device comprises a collector support or plate (such as an aluminium plate containing water), a voltage power supply, a coaxial needle and at least two microsyringe pumps to pump the polymer solutions to the coaxial needle, and wherein the method comprises passing through the inner capillary (the core) of a coaxial needle of the coaxial electrospray device a solution of PHAs, preferably of PHB, grafted onto bacterial cellulose dissolved in an ionic liquid (IL) and through the external part (shell) of the coaxial needle, a solution of a degradable polyester such as a PHA, PBAT or PBS, preferably PHAs, more preferably of PHB, dissolved in IL to provide core-shell particles onto the collector plate or support and optionally isolating and/or purifying said particles.

9. The method to obtain a core-shell particle of any of claims 7 or 8, wherein the flow rate ratio of the outer solution is from 0.05-0.2 mL/h, preferably 0.05 mL/h, and of the inner solutions is from 0.2-0.1 mL/h, preferably 0.2 mL/h.

10. The method of any of claims 7 to 9, wherein the PHAs, preferably of PHB, grafted onto bacterial cellulose is obtained by the method of any of claims 1 to 5.

11. The method of any of claims 7 to 10, wherein the outer solution is prepared by dissolving the PHAs, preferably PHB, in an ionic liquid such as BMIMCI, and the inner solution is prepared by dissolving the PHAs, preferably PHB, grafted onto bacterial cellulose in an ionic liquid such as BMIMCI, and wherein optionally each of the solutions are further mixed with a cosolvent to enhance the electrosprayability of both solutions, such as DMSO (Dimethyl sulfoxide), acetone or DMF (Dimethylformamide), preferably DMSO.

12. A method of encapsulating a cargo in a core-shell particle comprising:
a. A core made of PHAs, preferably of PHB, grafted onto bacterial cellulose; and
b. A shell consisting of a degradable polyester such as a PHA, PBAT or PBS, preferably PHAs, more preferably of PHB;
the method comprising using coaxial electrospray to pass through the inner capillary (the core) of the coaxial needle two solutions, one solution of PHAs, preferably of PHB, grafted onto bacterial cellulose dissolved in an ionic liquid (IL) and a further solution comprising the cargo in a suitable medium, so that both solutions come into contact in the inner capillary of the coaxial needle, and through the external part (shell) of the coaxial needle, a solution of a degradable polyester such as a PHA, PBAT or PBS, preferably PHAs, more preferably of PHB, in IL, to provide core-shell particles encapsulating the cargo and optionally isolating and/or purifying said particles, wherein optionally each of the solutions are further mixed with a cosolvent to enhance the electrosprayability of the solutions, such as DMSO, acetone or DMF, preferably DMSO.

13. A method of encapsulating a cargo in a core-shell particle comprising:
a. A core made of PHAs, preferably of PHB, grafted onto bacterial cellulose; and
b. A shell consisting of a degradable polyester such as a PHA, PBAT or PBS, preferably PHAs, more preferably of PHB;
wherein the method comprises using a coaxial electrospray device to obtain the particle, wherein the coaxial electrospray device comprises a collector support or plate (such as an aluminium plate containing water), a voltage power supply, a coaxial needle and at least three microsyringe pumps to pump the polymer solutions to the coaxial needle, and wherein the method comprises passing through the inner capillary (the core) of a coaxial needle of the coaxial electrospray device two solutions, one solution of PHAs, preferably of PHB, grafted onto bacterial cellulose dissolved in an ionic liquid (IL) and a further solution comprising the cargo in a suitable medium, so that both solutions come into contact in the inner capillary of the coaxial needle, and through the external part (shell) of the coaxial needle, a solution of a degradable polyester such as a PHA, PBAT or PBS, preferably PHAs, more preferably of PHB, dissolved in an IL, to provide the core-shell particle onto the collector plate or support and optionally isolating and/or purifying said particles, wherein optionally each of the solutions are further mixed with a cosolvent to enhance the electrosprayability of the solutions, such as DMSO, acetone or DMF, preferably DMSO.

14. The method according to any of claims 12 or 13, wherein the flow rate ratio of the outer solution is from 0.05-0.2 mL/h, of the inner solutions is from 0.2-0.1 mL/h and of the solution comprising the cargo is from 0.2-0.5 ml/h .

15. The method of any of claims 12 to 14, wherein the PHB grafted onto bacterial cellulose is obtained by the method of any of claims 1 to 5.

16. The method of any of claims 12 to 15, wherein the cargo is selected from the list consisting of enzymes or bacteria with biotechnological application, e.g. lysozymes, oxidoreductases, lipases or depolymerases, or *Pseudomonas putida, Bdellovibrio bacteriovorus, Escherichia coli, Lactobacillus* or *Bifidobacterium,* among others, respectively.

17. A core-shell particle comprising:
a. A core made of a PHA such as PHB grafted onto bacterial cellulose; and
b. a shell consisting of a degradable polyester such as a PHA, PBAT or PBS, preferably PHAs, more preferably of PHB.

18. A core-shell particle as obtained by the method of any of claims 7 to 16.

19. Use of the core-shell particle according to any of claims 17 or 18 for encapsulating cargos such as those selected from the group consisting of enzymes or bacteria with biotechnological application, e.g. lysozymes, oxidoreductases, lipases depolymerases, or *Pseudomonas putida* or *Bdellovibrio bacteriovorus, Escherichia coli, Lactobacillus* or *Bifidobacterium,* among others, respectively.
